# EUROPÄISCHE PATENTSCHRIFT

(11) **EP 0 275 879 B1**
(45) Veröffentlichungstag und Bekanntmachung des Hinweises auf die Patenterteilung: **04.09.1996**
(21) Anmeldenummer: 88100134.1
(22) Anmeldetag: 08.01.1988
(51) Int. Cl.: E04B 1/41, F16B 13/14, E04F 13/08

(54) **In einem Bohrloch eines Befestigungsgrundes einzumörtelnder Halte-und Traganker**
Holding and supporting anchor to be fastened with mortar in a bore hole in a mounting base
Ancre de retenue et de support à sceller dans un trou foré dans un support de fixation

(30) Priorität: 13.01.1987 DE 3700743; 27.05.1987 DE 3717816
(43) Veröffentlichungstag der Anmeldung: 27.07.1988
(73) Patentinhaber: HALFEN GmbH & CO. Kommanditgesellschaft, D-40591 Düsseldorf (DE)
(72) Erfinder: Fricker, Siegfried, D-7258 Heimsheim (DE)
(74) Vertreter: Wasmuth, Rolf, Dipl.-Ing.

(56) Entgegenhaltungen:
- DE-A- 2 503 895
- DE-A- 2 556 493
- DE-A- 3 444 801
- FR-A- 1 544 326
- FR-A- 2 550 815
- GB-A- 1 359 706

## Beschreibung

Die Erfindung betrifft einen in ein Bohrloch eines Befestigungsgrundes wie Beton oder Mauerwerk einzumörtelnden Halte- und Traganker nach dem Oberbegriff des Anspruches 1.

Derartige Anker werden z.B. zur Befestigung von Verkleidungsplatten an den Außenwänden von Gebäuden verwendet. Hierzu werden in die Gebäudeaußenwand, die aus Beton, Mauerwerk oder dgl. bestehen kann und als Fassade oder Befestigungsgrund bezeichnet wird, Bohrlöcher eingebracht, in welche die Anker mit einem Teil ihrer Länge, dem Befestigungsabschnitt - eingesteckt und darin meist mittels einer Mörtelmasse befestigt werden.An dem aus dem Befestigungsgrund herausragenden Teil des Ankers - seinem Tragabschnitt - werden Verkleidungsplatten - beispielsweise Natursteinplatten, Kunststoffplatten oder dgl. - aufgelagert und somit gehalten.

Ein bekannter Anker dieser Art (FR-A-1 544 326) weist einen Längsabschnitt aus einem S-förmig profilierten Teil auf, das mit seinem in einer lotrechten Ebene liegenden, den Befestigungsabschnitt bildenden Steg eine sichere Belastungsaufnahme gewährleistet. Der tragende Querschnitt des Befestingungabschnittes und damit die in Richtung der Traglast wirksame Tragfläche dieses Ankers, welche die Belastung über den Zementmörtel in den Befestigungsgrund einleitet, ist relativ schmal. Ein Anker dieser Art eignet sich ausschließlich für den Einsatz in den Horizontalfugen, die zwischen übereinanderliegenden Verkleidungsplatten bestehen. Wollte man diesen Anker in Vertikalfugen zwischen horizontal nebeneinanderliegenden Verkleidungsplatten einsetzen, käme zwar der Tragabschnitt des Ankers in die zwischen zwei horizontal nebeneinanderliegenden Platten befindliche Vertikalfuge zu liegen, jedoch wäre bei einer solchen Einbaulage des Ankers das S-Profil nicht mehr an einem in vertikaler Ebene liegenden hohen Steg belastet, weil der den Befestigungsteil bildende Steg nun eine horizontale Lage haben würde. Für eine solche Einbaulage ist somit der bekannte Anker nicht geeignet, da er in dieser Lage nicht ausreichend mit Kräften belastet werden kann. Es sind daher bei dieser bekannten Ankerausführung für die Verwendung des Ankers in Horizontalfugen zwischen zwei vertikal übereinander liegenden Verkleidungsplatten einerseits und Vertikalfugen zwischen zwei horizontal nebeneinanderliegenden Platten andererseits verschiedene Anker erforderlich Diese verschiedenen Anker zur Verwendung in Horizontal- und Vertikalfugen müssen gesondert hergestellt und sowohl vom Hersteller als auch vom Verwender auf Lager gehalten werden, was beträchtliche Kosten verursacht.

Ein Halte- und Traganker nach dem Oberbegriff des Patentanspruches 1 ist aus der DE 34 44 801 A1 bekannt. Auch bei diesem Anker sind für den Einsatz zwischen Vertikalfugen einerseits und Horizontalfugen andererseits unterschiedliche Ausführungen erforderlich; denn der in das Bohrloch einzusetzende Längsabschnitt ist als Doppel-T-Profil ausgeführt, dessen Mittelsteg im Bohrloch vertikal stehen muß, um die Last aufnehmen zu können.

Aus der DE 25 56 493 A1 ist ein rohrförmiger Verankerungsbolzen bekannt, der in einem Bohrloch mittels Klebstoff zu befestigen ist. Um die Verteilung des Klebers zwischen dem Bolzen und der Bohrlochwandung zu unterstützen, sind an der Außenfläche des im übrigen durchgehend zylindrischen Bolzens stegförmige Erhöhungen vorhanden.

Der Erfindung liegt die Aufgabe zugrunde, einen Halte- und Traganker der gattungsgemäßen Art so auszubilden, daß er sowohl für Vertikalfugen als auch für Horizontalfugen zwischen den zu halternden Platten ohne Nachteil hinsichtlich seiner Tragfähigkeit verwendbar ist. Der Anker soll einfach und billig als Massenartikel hergestellt werden können.

Die Aufgabe wird gemäß der Erfindung mit den Merkmalen des Patentanspruches 1 gelöst.

Der erfindungsgemäß ausgebildete Anker hat unabhängig von seiner Einbaulage stets ein großes Widerstandsmoment und damit eine hohe Tragfähigkeit. Er kann in einfacher Weise in seiner Länge unterschiedlichen Tiefen der Bohrlöcher angepaßt werden, indem das Rohr lediglich auf die jeweilige Bohrlochtiefe auf Länge zugeschnitten wird. Bei symmetrischer Anordnung der Unebenheiten auf der Rohrmantelfläche oder bei Anordnung dieser Unebenheiten derart, daß sie außerhalb des Bereichs der vertikalen Tragebene und der Horizontalebene liegen,hat der Traganker in jeder um 90° gedrehten Einbaulage seine maximale Tragfähigkeit. Dies gilt insbesondere dann, wenn der Anker, bezogen auf seine Einbaulage, in der vertikalen und der horizontalen Axialebene frei von Verformungen gehalten ist. Zu der hohen Tragfähigkeit des erfindungsgemäßen Halte- und Tragankers trägt die Ausführung bei, in der in der Mantelfläche in Längsrichtung des Längsabschnittes hintereinanderliegende Vertiefungen derart im Abstand und als Einzelverformungen ausgebildet sind, daß in einem durch eine Vertiefung gelegten Radialschnitt der an sie angrenzende Teil des Rohres in seinem ursprünglichen Durchmesser unverändert bleibt, so daß das Rohr nur im Bereich der in die Mantelfläche eingebrachten einzelnen Vertiefungen in seinem ursprünglichen Durchmesser verändert ist, also außerhalb der Vertiefungen unverändert erhalten ist.

Die Tragebene kann trotz der Vertiefungen immer an einer Stelle des größten Rohrdurchmessers liegen, so daß das ursprüngliche große Widerstandsmoment des Rohres trotz dieser Verformungen erhalten bleibt. Ein weiterer wesentlicher Vorteil liegt darin, daß der Längsabschnitt des Rohres noch vor Ort, also auf der Baustelle auf jede beliebige Einbaulänge gekürzt und damit der tatsächlichen Länge des Bohrloches angepaßt werden kann.

Die Aufsattelfläche des im Bohrloch befestigten Rohrabschnittes des Längsabschnittes des Ankers - also die Mantelfläche des Ankers, welche die Tragbelastung des Ankers in den Befestigungsgrund,also in das Mauerwerk oder den Beton,überträgt - entspricht der in Richtung der wirkenden Tragkraft gesehenen Projektion des Rohrquerschnittes. Da bei der bevorzugten Ausführung das Rohrprofil im Einbauzustand in der vertikalen und der horizontalen Axialebene, unverformt ist, hat diese Aufsattelfläche in beiden Einbaulagen des Ankers immer eine dem maximalen Profildurchmesser des Rohres entsprechende Breite. Sowohl das Widerstandsmoment des vorzugsweise geschlossenen Rohres als auch dessen Aufsattelfläche sind im Vergleich zu den bekannten Ankern aus Flacheisen oder Doppel-T-Profilen größer, so daß bei gleichen Belastungen der erfindungsgemäße Traganker auch einfacher, kleiner und damit materialsparender sein kann. Ein in seinen Abmessungen kleiner ausgebildeter Halte- und Traganker benötigt aber auch kleinere Bohrlöcher im Befestigungsgrund, so daß insbesondere die Befestigung vor Ort einfach und mit leichterem Werkzeug sowie mit geringerer Menge an Zementmörtel durchgeführt werden kann.

Der erfindungsgemäße Anker kann auch höhere Windkräfte, Sogund Druckkräfte sowie Biegebelastungen als bekannte Anker aufnehmen, so daß größere Sicherheitsreserven bei gleichen Bohrlochabmessungen erreicht werden können.

Die Vertiefungen sind vorzugsweise in Längsrichtung des Längsabschnittes des Ankers hintereinanderliegend angeordnet, es kann aber, auch eine Anordnung nebeneinander zweckmäßig sein.

Im Tragabschnitt sind vorzugsweise bei dessen Formvorgang Hohlrippen eingeformt, die in Längsrichtung des Tragankers verlaufen und das Widerstandsmoment des Tragabschnittes des Rohres gegen Abknicken erhöhen. Vorzugsweise verläuft unterhalb des Tragabschnittes auf der einer oberen Aufsitzfläche abgewandten Seite der konische Übergang bis zur vorderen Kante des Tragabschnittes aus, wodurch eine deutliche Verstärkung des Tragabschnittes gegen Abknicken erzielt ist. Ebenso weist der konische Ubergangsabschnitt zur Versteifung Verstärkungsrippen auf. In Weiterbildung der Erfindung weist der Längsabschnitt des Halte- und Tragankers eine öffnung zum Einpressen von Mörtel auf. Nach dem erfindungsgemäßen Verfahren zum Einmörteln eines derartigen Ankers wird der Anker zunächst bis zur Öffnung in das Bohrloch eingesetzt und ausgerichtet, um danach durch die Öffnung in das Rohrinnere des Ankers Mörtel einzupressen. Der Mörtel tritt aus dem offenen Ende des Längsabschnitts in das Bohrloch aus und wird durch den Spalt zwischen dem Längsabschnitt und der Bohrlochwandung zur Außenseite des Befestigungsgrundes gedrückt. Mittels einer Presse wird Mörtel durch die Öffnung so lange gedrückt, bis er an der Außenseite des Befestigungsgrundes wieder austritt. Auf diese Weise ist eine homogene und absolut dichte, hohlraumfreie Einmörtelung des Halte- und Tragankers im Befestigungsgrund gewährleistet.

Im Rohr kann dabei ein Stopfen angeordnet sein, der das Rohrprofil gegenüber seinem Tragabschnitt verschließt, so daß kein Mörtel aus dem gegebenenfalls offenen Tragabschnitt austreten kann.

Weitere Merkmale der Erfindung ergeben sich aus den weiteren Ansprüchen. In den Zeichnungen sind Ausführungsbeispiele der Erfindung dargestellt, die nachfolgend im einzelnen näher beschrieben sind. Es zeigen
- Fig. 1: eine perspektivische Darstellung des erfindungsgemäßen Halte- und Tragankers in einem ersten Ausführungsbeispiel,
- Fig. 2: eine perspektivische Darstellung eines zweiten Ausführungsbeispieles des Ankers,
- Fig. 3: eine perspektivische Darstellung eines dritten Ausführungsbeispieles des Ankers mit offenem Rohrprofil,
- Fig. 4: eine perspektivische Darstellung eines Ankers mit auf der Rohrmantelfläche befindlichen zapfenartigen Erhöhungen
- Fig. 5: eine perspektivische Darstellung eines Ausführungsbeispiels mit zur Rohrachse abgekröpftem Tragabschnitt,
- Fig. 6: einen Schnitt längs der Linie A-A in Fig. 1,
- Fig. 7: einen Schnitt längs der Linie B-B in Fig. 2,
- Fig. 8: einen Schnitt längs der Linie C-C in Fig. 3,
- Fig. 9: eine Frontansicht einer Verankerung zweier Platten mit dem in einer Pattenhorizontalfüge liegenden Tragabschnitt des Ankers nach Fig. 3 im Querschnitt,
- Fig. 10: eine Frontansicht einer Verankerung zweier Platten mit dem in einer Plattenvertikalfuge liegenden Tragabschnitt eines Ankers nach Fig. 2 im Querschnitt,
- Fig. 11: eine perspektivische Ansicht eines im Befestigungsgrund eingemörtelten Ankers nach Fig. 1 mit in einer Vertikalfuge der Platten liegendem Tragabschnitt,
- Fig. 12: eine perspektivische Ansicht eines im Befestigungsgrund eingemörtelten Ankers nach Fig. 1 mit in einer Horizontalfuge der Platten liegendem Tragabschnitt,
- Fig. 13: eine perspektivische Ansicht eines im Bohrloch im Befestigungsgrund mittels durch das Rohrprofil eingepreßten Mörtels festgelegten Ankers,
- Fig. 14: eine Seitenansicht eines weiteren Ausführungsbeispiels eines Ankers mit einer zur Horizontalebene geneigt liegenden Aufsitzfläche des Tragabschnitts und zwischen Aufsitzfläche und Platte liegendem Ausgleichskeil,
- Fig. 15: eine Draufsicht auf den Ausgleichskeil nach Fig.14,
- Fig. 16: eine Draufsicht auf die Aufsitzfläche des Ankers nach Fig. 14,
- Fig. 17: eine Seitenansicht eines weiteren Ausführungsbeispiels des erfindungsgemäßen Ankers mit einem einen Haltedorn bildenden, rechtwinklig abgewinkelten Tragabschnittsende,
- Fig. 18: ein der Fig. 17 ähnliches Ausführungsbeispiel mit einem abgekröpften, schräg aufwärts gerichteten Tragabschnittsende,
- Fig. 19: eine Seitenansicht eines Halte- und Tragankers mit an dessen vorderem Endabschnitt festgelegten, aus einem Winkeleisen gebildeten Tragabschnitt,
- Fig. 20: einen erfindungsgemäßen Halte- und Traganker, dessen Längsabschnitt im Endbereich mit einer das Rohrprofil annähernd schließenden Eindellung 10a eingedrückt ist,
- Fig. 21: einen Halte- und Traganker ähnlich dem nach Fig. 20, mit einer anders geformten Eindellung am Ende des Längsabschnittes des Rohres des Tragankers.

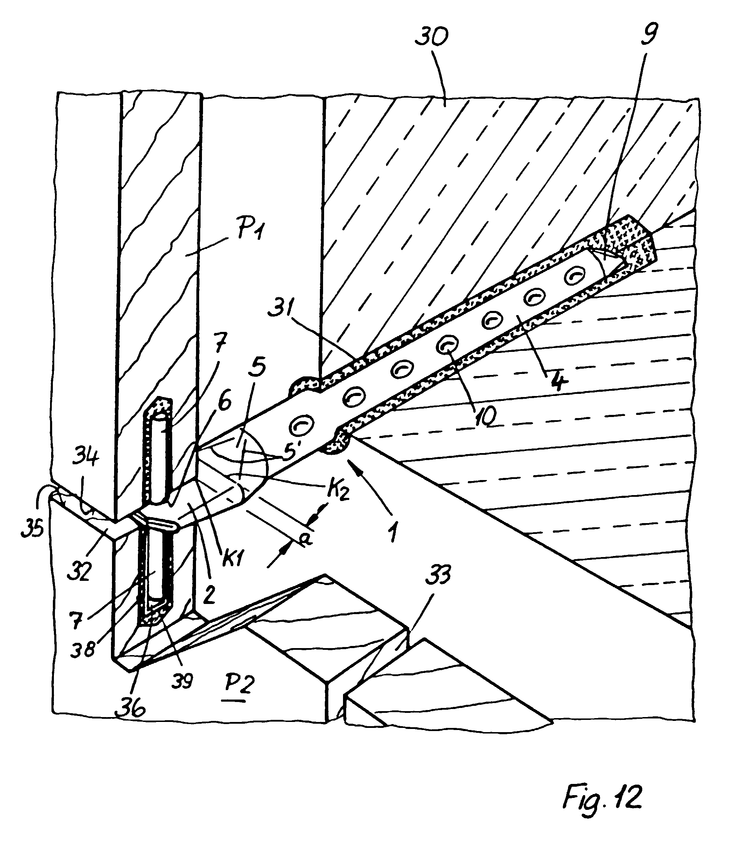

Die in den Zeichnungen dargestellten Halte- und Traganker - im folgenden nur Anker genannt - bestehen im wesentlichen aus einem vorderen Tragabschnitt 2 mit einer Halterung 3 und einem in ein Bohrloch 31 eines Befestigungsgrundes 30 (Fig.12) einzumörtelnden Längsabschnitt 4. Der Längsabschnitt 4 und der Tragabschnitt 2 des Ankers 1 sind durch einen konischen Übergangsabschnitt 5 miteinander verbunden.

Der erfindungsgemäße Anker 1 ist aus einem geschlossenen Rohrprofil, vorzugsweise einem Stahlrohrprofil, gebildet, das beliebigen Querschnitt aufweisen kann. Bevorzugt wird ein im Querschnitt kreisförmiges Rohrprofil. Es kann aber auch oval oder mehrkantig sein. Die gezeigten Ausführungsbeispiele gehen von einem kreisrunden Querschnitt des Rohrprofiles aus, das von einem längeren Rohr abgelängt, d. h. abgeschnitten ist.

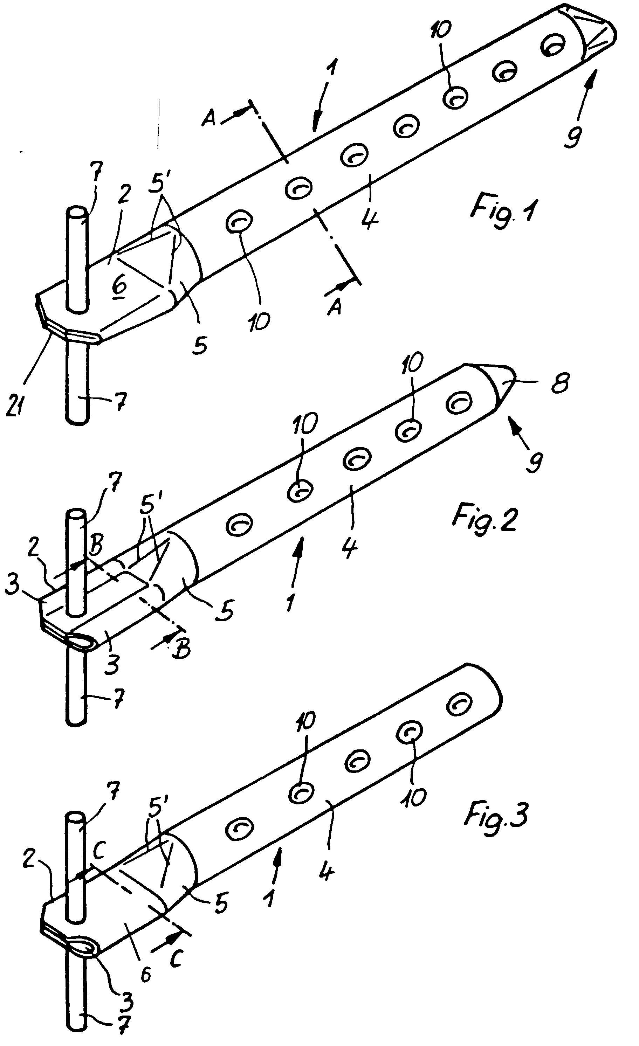

Ein derartiges abgelängtes Rohrprofil wird an einem Ende radial derart zusammengepreßt, daß die in einer Vertikalebene Y-Y (Fig.6) einander gegenüberliegenden Umfangsabschnitte des Rohrprofils dicht aneinanderliegen und den Tragabschnitt 2 bilden. Aufgrund des dicht verpreßten Tragabschnitts 2 (Fig.1) kann an diesem Ende des Rohrprofiles kein Wasser in den Anker eindringen.

Im Ausführungsbeispiel nach Fig. 1 weist der Tragabschnitt 2 eine obere Aufsitzfläche 6 für eine zu haltende Platte P1 (Fig. 12) auf, wobei im Tragabschnitt 2 lotrecht ein Haltedorn 7 befestigt ist. Der Tragabschnitt liegt in der X-X-Axialebene (Fig. 6) des Rohrprofils und weist eine quer zur Längsmittelachse des Ankers 1 gemessene Breite auf, die größer als der Durchmesser des Rohrprofils bzw. des Längsabschnitts 4 ist. Der konisch ausgebildete Übergangsabschnitt 5 zwischen dem Längsabschnitt 4 und dem Tragabschnitt 2 gewährleistet einen fließenden, hoch belastbaren Übergang; der Übergangsabschnitt verläuft in der Längsachse des Rohrprofils konisch verjüngt von dem Durchmesser des Längsabschnittes des Rohres zu dem dünneren Tragabschnitt 2, während er sich in der X-X-Axialebene von dem Durchmesser des Längsabschnitts 4 auf die etwas größere Breite des Tragabschnitts 2 konisch erweitert. Eine derartige Ausbildung gewährleistet eine hohe Stabilität gegen Zug-, Druck- und Biegekräfte dieser durch Gewichts- und Außenkräfte wie Wind, Schnee usw. stark beanspruchten Teile des Ankers 1, nämlich des Tragabschnittes 2 und des Ubergangsabschnittes 5.

Vorzugsweise weist der Tragabschnitt 2 (Fig.1) nur eine horizontale Aufsitzfläche 6 auf, während auf der unteren Breitseite des Tragabschnitts 2 der Übergangsabschnitt 5 zur vorderen Kante 21 des Tragabschnitts 2 konisch verjüngt ausläuft, wodurch der Tragabschnitt 2 gegen Abknicken verstärkt ist. Zur weiteren Erhöhung der Steifigkeit kann der konische Übergangsabschnitt 5 mit Verstärkungsrippen 5' versehen sein (Fig.2). Bei der erfindungsgemäßen Ausbildung ist von besonderem Vorteil, daß bei dem Anker nur kleine Querschnitte erforderlich sind, wodurch nicht nur Material eingespart, sondern auch die Herstellung des Ankers selbst vereinfacht wird. Das Rohrprofil des Längsabschnittes 4 weist über dessen Länge hintereinanderliegende Unebenheiten, wie Verformungen 10 auf. Alle Ausführungsbeispiele der Erfindung zeigen Verformungen 10, die als Vertiefungen in Form von Dellen ausgebildet sind.

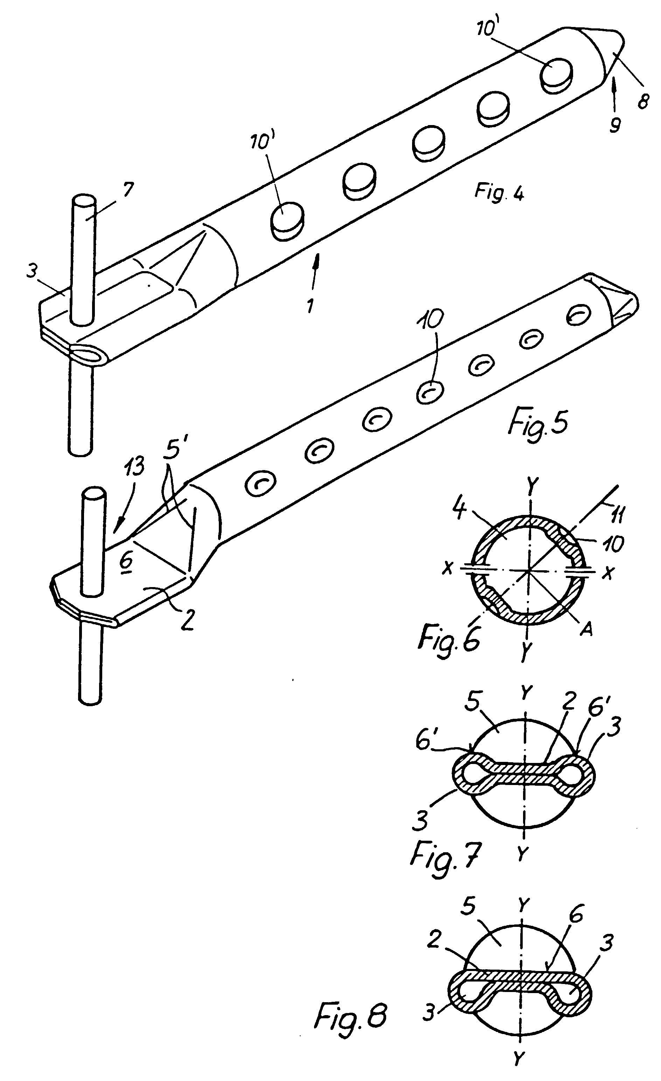

Fig. 4 zeigt einen Anker mit auf der Mantelfläche des Längsabschnittes 4 angebrachten Erhöhungen in Form von warzenförmigen Ansätzen 10'.

Vorteilhaft sind diese Unebenheiten, also die Verformungen 10, symmetrisch zur Horizontalebene X-X und/oder zur lotrechten Ebene Y-Y des Rohrprofiles so angeordnet, daß der neben den Verformungen 10 liegende Rohrquerschnitt seinen ursprünglichen Durchmesser behält. Die Verformungen 10 sind also jeweils nur räumlich begrenzte Einzelverformungen, die den übrigen ursprünglichen Querschnitt des rohrförmigen Längsabschnittes 4 nicht verändern, so daß dessen ursprüngliche Tragkraft nicht beeinträchtigt wird.

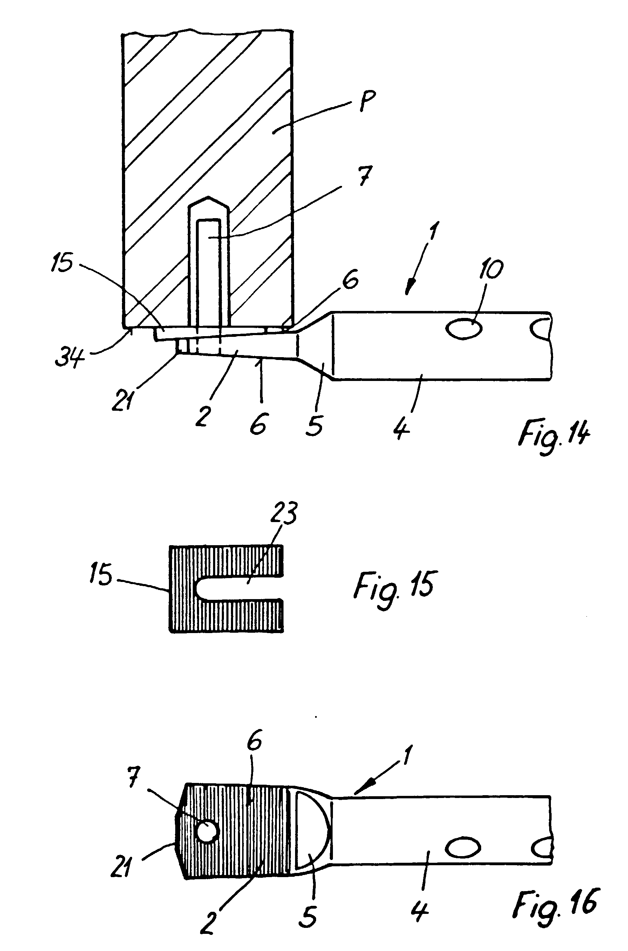

Aus Fig. 6, die einen Schnitt nach Linie A-A der Fig. 1 zeigt ist erkennbar, daß die Unebenheiten 10, also die Verformungen in Form von Dellen, außerhalb der vertikalen Axialebene Y-Y und der Horizontalebene X-X liegen. Bezogen auf den in Fig. 1 und 6 dargestellten Anker und die in Fig.12 gezeigte Einbaulage dieses Ankers ist die Axialebene Y-Y die lotrechte Tragebene, während X-X die hierzu rechtwinklig liegende Horizontalebene ist. Beide Ebenen schneiden sich genau auf der Längsmittelachse A (vgl. Fig.6) des Ankers bzw. Rohrprofils. Der Tragabschnitt 2 liegt in der Horizontalebene X-X, auf der der Haltedorn 7 lotrecht steht, der die aufzulagernde Platte hält (vgl. Fig.12 und 14).

Bei dem bevorzugten Ausführungsbeispiel der Erfindung nach Fig. 6 sind die Verformungen außerhalb der Axialebnen Y-Y bzw. X-X vorgesehen; sie sind in Fig. 6 etwa mittig im I. und im III. Quadranten des kreisrunden Rohrprofiles angeordnet. In dieser bevorzugten Ausführungsform sind die Verformungen in einander etwa diametral gegenüberliegenden Wandungsabschnitten des Rohrprofils als Dellen 10 ausgebildet. Dabei liegt jede Verformung bzw. Delle 10 symmetrisch zu einer Winkelhalbierenden 11 des zwischen den Ebenen Y-Y bzw. X-X jeweils eingeschlossenen rechten Winkels.

Das offene freie Ende 9 des hinteren Längsabschnittes 4 ist - vgl. Fig. 1 - vorteilhaft durch Verformen verjüngt ausgebildet damit der Anker 1 leicht in ein mit Zementmörtel oder Beton gefülltes Bohrloch 31 (vgl. Fig. 12) eingetrieben werden kann, wobei der Zementmörtel oder Beton von dem verjüngten Ende 9 in Richtung zur Bohrlochwandung verpresst wird. Die konische Verjüngung des Endes 9 gewährleistet eine hohe Festigkeit.

Das verjüngte Ende 9 kann statt durch Verformen auch durch eine auf oder in das Ende 9 des Längsabschnittes 4 eingesetzte, verjüngte Kappe 8 gebildet sein (Fig.2). Die Kappe 8 bzw. das verjüngte Ende ist dabei vorteilhaft kegelig spitz zulaufend (Fig.2), konisch oder schneidenartig auslaufend (Fig.1) ausgebildet. Auch andere, eine Verdrängung des Zementmörtels bzw. Betons gewährleistende Gestaltungen sind zweckmäßige

Der erfindungsgemäße Anker 1 wird in ein mit Zementmörtel oder Beton ausgefülltes Bohrloch 31 eines Befestigungsgrundes 30 hineingetrieben (Fig.12) wobei das verjüngte Ende 9 den Zementmörtel zur Bohrlochwandung verdrängt und eine lückenlose Verfüllung des Spaltes zwischen dem Anker und der Bohrlochwandung gewährleistet.

In der Einbaulage nach Fig. 12 ist der Anker 1 so angeordnet, daß der Tragabschnitt 2 in eine Horizontalfuge 32 zwischen zwei zu halternden vertikal angeordneten Platten P1 und P2 eingreift und die Tragseite 34 der Platte P 1 auf der zugewandten Aufsitzfläche 6 des Tragabschnitts 2 des Ankersl aufliegt. Die Aufsitzfläche 6 ist in Richtung der Längsachse A (Vgl Fig. 6) des Ankers möglichst lang ausgebildet, so daß ihre innere Kante K2 nahe an dem Befestigungsgrund 30 liegt. Auf diese Weise kann die innere Kante K1 der zu halternden Platte P1 nahe am Befestigungsgrund 30 gelagert werden, wodurch der wirksame Hebelarm des aus dem Befestigungsgrund 30 herausragenden Ankerabschnittes und damit die Biegebelastung des Ankers 1 möglichst klein gehalten werden kann. Auf diese Weise kann der Anker entsprechend klein dimensioniert werden, wodurch sich Materialeinsparungen ergeben. Es ist daher vorteilhaft, den Abstand a zwischen den Kanten K1 und K2 zu minimieren (vgl. Fig 12).

Aus Fig. 12 ist weiter ersichtlich, daß die auf der Aufsitzfläche 6 abgestützte Platte P1 durch den lotrechten Haltedorn 7, der in ein mit Mörtel gefülltes Bohrloch in der Tragseite 34 der Platte P 1 eingreift, in ihrer Lage gehalten wird. Auf der der Aufsitzfläche 6 gegenüberliegenden Seite des Tragabschnitts 2 greift der Haltedorn 7 in die schmale Halteseite 35 der darunter liegenden Platte P2 ein. Hierzu ist in der schmalen Halteseite 35 ein Bohrloch 38 vorgesehen, in das eine Kunststoffbuchse 36 mittels Zementmörtel 39 eingesetzt ist. Der Haltedorn 7 greift axial mit Spiel in die Kunststoffbuchse 36, so daß die mit geringem Abstand zum Tragabschnitt 2 liegende Platte P2 vertikale Ausgleichsbewegungen aufgrund von Temperaturausdehnungen ausführen kann.

Die erfindungsgemäße Ausbildung des Ankers 1 mit den im Rohrmantel vorgesehenen Verformungen 10 gewährleistet einen sicheren Sitz des eingemörtelten Ankers 1 im Bohrloch 31 des Befestigungsgrundes 30 (vgl. Fig.12). Der Anker 1 kann hohe Zug- und Druckkräfte aufnehmen, da der Mörtel bzw. Beton in die Vertiefungen 10 greift und einen Formschluß zwischen Anker und Mörtel herstellt. Die in der Tragebene Y-Y wirkende Plattenlast wird über eine große Sattelfläche, nämlich die ursprüngliche, erhalten gebliebene Querschnittsfläche des Rohres, die von den Verformungen 10 nicht erfaßt ist, in den Befestigungsgrund 30 eingeleitet, wobei aufgrund des in der Tragebene unverformten Rohrprofils ein hohes Widerstandsmoment gegen Knickbelastungen gegeben ist.

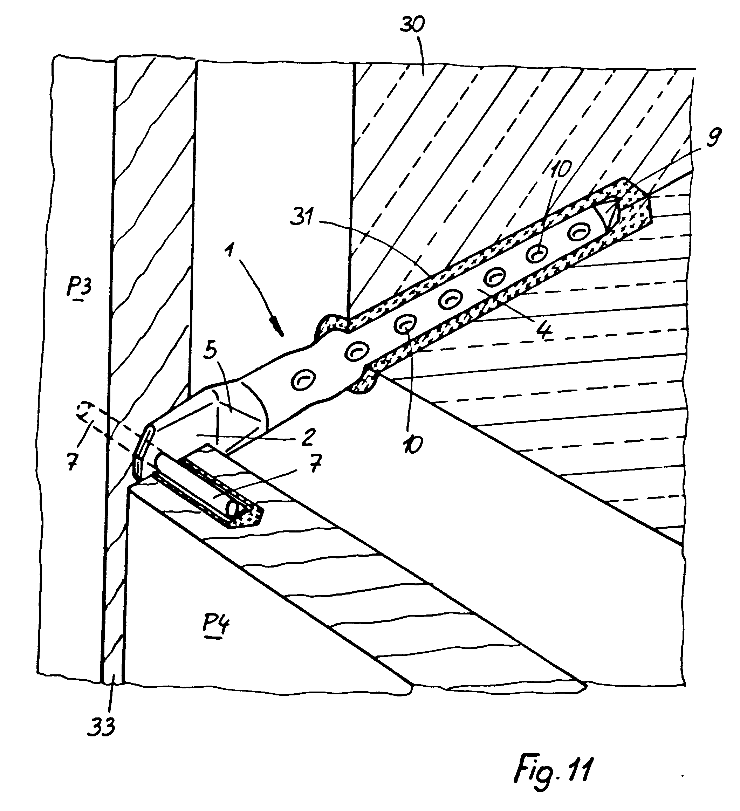

Aufgrund der Anordnung der Verformungen 10 außerhalb der Bereicheder Axialebenen Y-Y bzw. X-X kann derselbe Anker 1 auch - wie in Fig. 11 dargestellt - zur Halterung von Platten P3, P4 in Vertikalfugen 33 eingesetzt werden, wobei die Fläche 6 in einer lotrechten Ebene liegt, während sie in Fig. 12 horizontal angeordnet ist. Aufgrund der erfindungsgemäßen Ausgestaltung ändert sich bei diesen verschiedenen Einbaulagen des Ankers die Größe seiner Aufsattelfläche nicht, d. h. also derjenigen Fläche,welche die Tragbelastung in den Befestigungsgrund 30 einleitet. Die Aufsattelfläche ist also in beiden Einbaulagen nach den Fig. 11 bzw. 12 gleich groß,so daß der Anker in gleicher Weise für den Einbau in Horizontal- und in Vertikalfugen geeignet ist, wie dies die Fig. 11 und 12 zeigen.

Der Tragabschnitt 2 greift in Fig. 11 mit seitlichem Spiel in die Vertikalfuge 33, wobei der Haltedorn 7 beiderseits des Tragabschnitts 2 mit axialem Spiel in Bohrungen der Platten P 3, P4 liegt.

Das Ausführungsbeispiel nach Fig. 2 unterscheidet sich von dem nach Fig. 1 durch eine andere Ausbildung des Tragabschnitts und durch die spitzkeglige Kappe 8 für den Verschluß des Längsabschnittes 4.

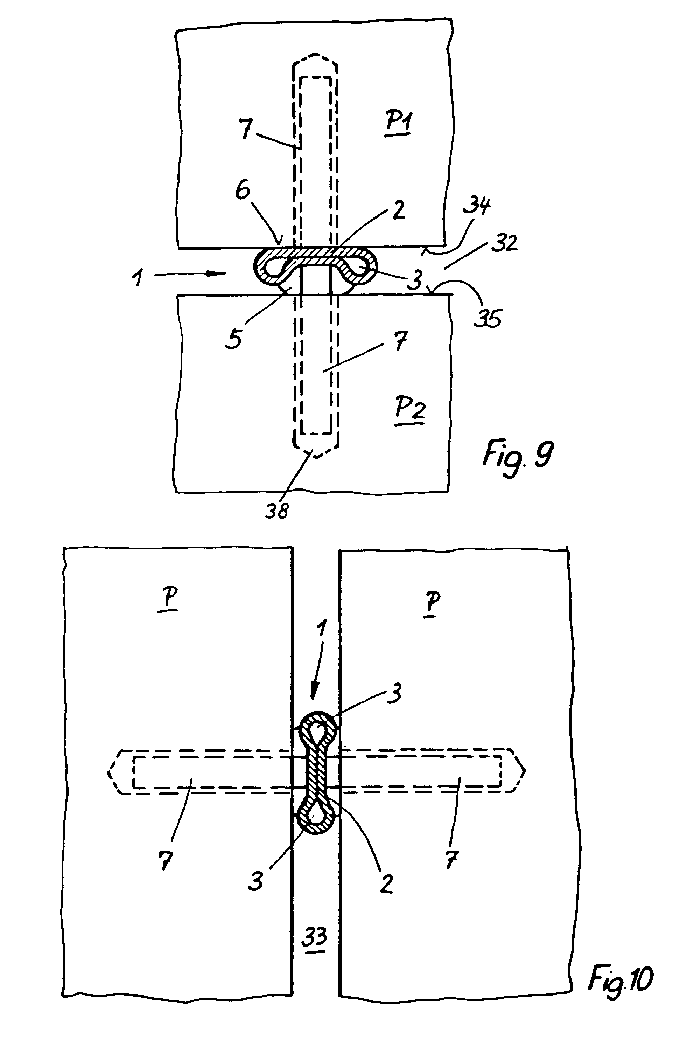

Die Verformung des vorderen Abschnittes des Rohres zum Tragabschnitt 2 ist derart, daß beiderseits der Längsmittelachse A (vgl. Fig. 6) des Tragankers 1 hohle Rippen 3 ausgebildet sind, zwischen denen die Wandungen des Rohrprofils aneinander liegen. Die Hohlrippen sind - wie Fig. 7 zeigt - symmetrisch zurY-Y-Axialebene angeordnet und ferner symmetrisch zur X-X-Axialebene ausgebildet. Sie dienen der Versteifung des Tragabschnittes gegen Abknicken und setzen sich vorteilhaft im konischen Übergangsabschnitt 5 fort. In der in Fig. 7 dargestellten Lage ruht die Platte nicht, wie bei den Ausführungsbeispielen der Fig. 1,3 und 5 sowie 9 und 12, flächig auf, sondern auf den parallel liegenden Aufsitzlinien 6'. Eine Einbaulage des Ankers 1 nach den Fig. 2 und 7 ist in Fig.10 dargestellt. Der Tragabschnitt 2 liegt in einer Vertikalfuge 33 mit Spiel zwischen zwei Platten P, wobei jeder Plattenrand mit geringem horizontalem Abstand zum Tragabschnitt 2 bzw. dessen Versteifungsrippen 3 liegt. Der Haltedorn 7 greift seitlich in entsprechende Bohrungen in den Platten P, wobei ein axiales Spiel zum Ausgleich von Temperaturausdehnungen vorgesehen ist.

Im Ausführungsbeispiel des Ankers nach Fig. 3 und 8 ist das freie Ende 9 des Längsabschnittes 4 offen. Der Tragabschnitt 2 ist mit symmetrisch zur Y-Y-Axialebene angeordneten hohlen Versteifungsrippen 3 ausgeformt. Auf der einen Seite des Tragabschnitts 2 ist eine ebene Aufsitzfläche 6 gebildet, wozu die Hohlrippen 3 ausschließlich auf der von der Aufsitzfläche abgewandten Seite des Tragabschnitts 2 ausgebildet sind (vgl. Fig. 8)

In Fig. 9 ist der Anker nach Fig. 3 und 8 in einer Einbaulage für eine Horizontalfuge dargestellt. Die obere Platte P1 liegt mit ihrer Tragseite auf der Aufsitzfläche 6 auf und ist in ihrer Lage durch einen in die Tragseite hineinragenden, Dorn 7 gesichert. Die untere Platte P 2 liegt mit ihrer schmalen Halteseite 35 mit Abstand zum Tragabschnitt 2, wobei der Dorn 7 mit axialem Spiel in eine Bohrung 38 der Halteseite 35 sichernd eingreift.

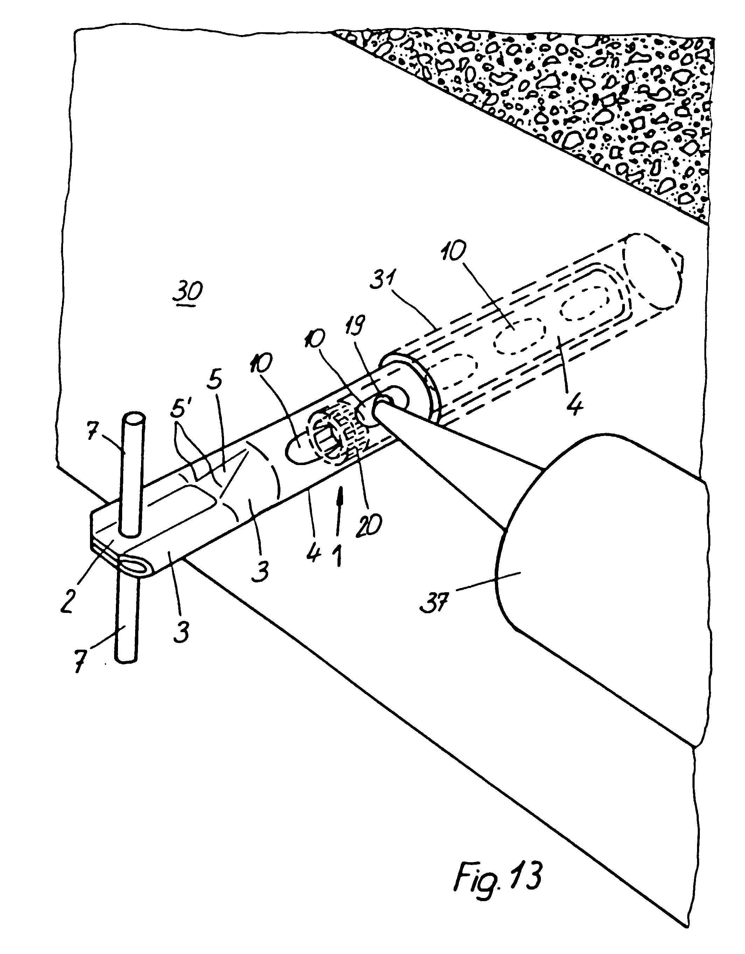

Der Anker nach dem Ausführungsbeispiel in Fig. 5 weist einen Tragabschnitt 2 auf, der parallel und versetzt zur horizontalen Mittelebene des Ankers liegt. Die Verlagerung des Tragabschnittes 2 ist durch Abbiegen des konischen Übergangsabschnittes 5 geschaffen. Ein derartiger Anker 1 kann nachträglich über einer schon gesetzten Platte im Befestigungsgrund eingebracht werden, da das einzubringende Bohrloch oberhalb der bereits montierten Platte liegt. Der Anker nach Fig. 5 ist ferner für den unteren Abschluß einer Gebäudeverkleidung einsetzbar, da das Bohrloch bzw. der Anker selbst durch die anzuordnende Platte vollständig verdeckt wird. Ein vorteilhafter Anker zum positionsgenauen Einsetzen und Einmörteln in einem Bohrloch ist in Fig. 13 gezeigt. Der Anker 1 ist wie bereits beschrieben ausgebildet und weist im Längsabschnitt 4 eine Öffnung 19 auf, die vorzugsweise in einer Einbuchtung 10 liegt. Die Öffnung 19 ist so angeordnet, daß sie bei positionsgenau gesetztem Anker 1 außerhalb des Bohrlochs 31 liegt. Im Inneren des zum Grund des Bohrlochs 31 offenen Längsabschnitts 4 ist ein Stopfen 20 eingesetzt, der vorzugsweise zwischen zwei Dellen 10 im Inneren des Rohrprofils festgelegt ist. Der Stopfen verschließt das Rohrprofil zum Tragabschnitt 2 hin, so daß die Öffnung 19 in den hinteren Raum des Längsabschnitts, der nach hinten offen ist, mündet. Vorteilhaft wird der Stopfen vor dem Einbringen der Dellen 10 in Axialrichtung des Längsabschnitts 4 positionsgenau eingeschoben und durch die danach eingebrachten Verformungen (Dellen) in seiner Lage fixiert. Diese Ausbildung des Ankers ermöglicht ein einfaches und sicheres Einbringen des Mörtels. Durch die Öffnung 19 wird in den hinteren Raum des Rohrankers mit einer Spritzvorrichtung 37 Zementmörtel eingepreßt, der durch das offene Ende des Längsabschnitts in das den Anker umgebende Bohrloch 31 austritt. Über die Öffnung 19 wird soviel Mörtel eingepresst, bis dieser durch den Ringraum zwischen dem Anker 1 und der Wandung des Bohrlochs 31 am Befestigungsgrund wieder austritt. Hierdurch wird ein absolut dichtes und hohlraumfreies Einmörteln des Längsabschnitts 4 und damit des Ankers gewährleistet, wobei die Dellen 10 einen Formschluß des Längsabschnitts 4 mit dem Mörtel sowohl auf dem Außenumfang wie auf dem Innenumfang des Längsabschnitts 4 bilden.

Der Anker in der Ausführungsform nach den Fig. 14 bis 16 weist einen Tragabschnitt auf, der symmentrisch zur X-X-Axialebene und zur Y-Y-Axialebene ausgebildet ist. Beidseitig des Tragabschnitts 2 sind Aufsitzflächen 6 ausgebildet, die zur vorderen Kante 21 des Tragabschnitts 2 abfallen; die Aufsitzflächen 6 schließen mit der Horizontalebene X-X einen spitzen Winkel ein. Zwischen einer Aufsitzfläche 6 und der aufsitzenden Platte P ist ein Ausgleichskeil 15, vorzugsweise ein Kunststoffkeil, angeordnet, dessen Keilwinkel dem Neigungswinkel der Aufsitzfläche 6 zur X-X-Axialebene entspricht. Die einander zugewandten Flächen von Ausgleichskeil 15 und Tragabschnitt 2 sind - zur Erhöhung des Reibkoeffizienten - aufgerauht, vorzugsweise gezahnt ausgebildet. Der Ausgleichskeil ist - nach Aufsetzen der Platte P - in Längsrichtung des Ankers 1 verschiebbar, so daß eine genaue Höhenpositionierung der aufsitzenden Platte P eingestellt werden kann. Die aufsitzende Platte P ist wiederum durch einen Haltedorn 7 in ihrer Lage gesichert, wobei der Ausgleichskeil 15 einen mittigen, zur Spitze des Keils offenen Schlitz 23 aufweist, in dem der Haltedorn 7 liegt.

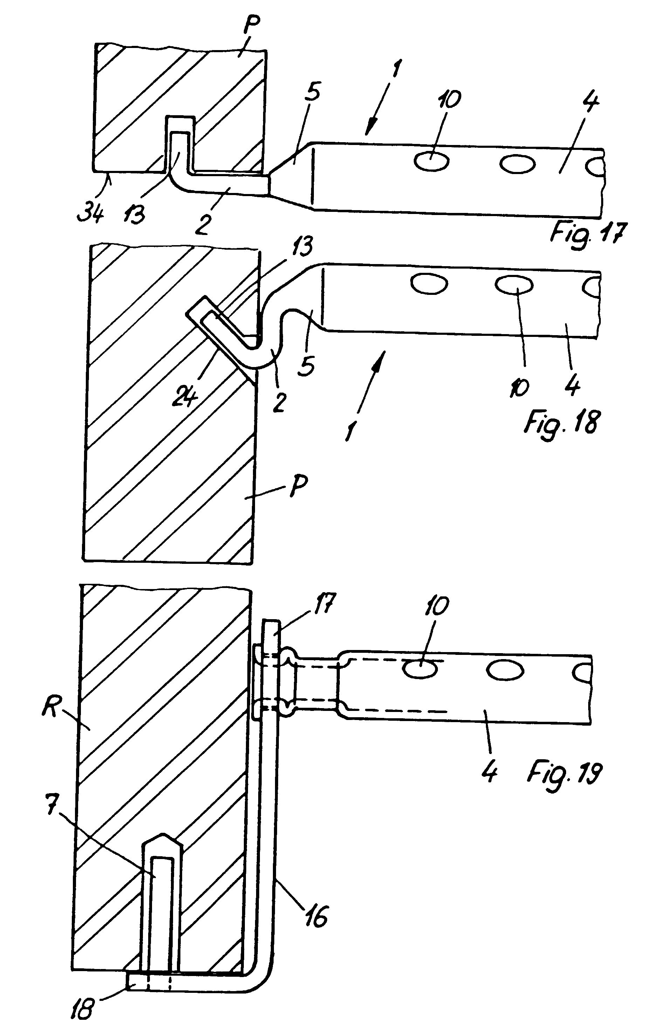

Im Ausführungsbeispiel nach Fig. 17 ist der freie Endabschnitt 13 des Tragabschnittes 2 rechtwinklig abgebogen und bildet einen vorzugsweise flächigen Haltesteg, der - wie im Ausführungsbeispiel nach Fig. 12 - in eine Aufnahme in der Tragseite einer zu haltenden Platte P eingreift.

Im Ausführungsbeispiel nach Fig. 18 ist der Tragabschnitt 2 unmittelbar am konischen Übergangsabschnitt 5 rechtwinklig nach unten abgebogen, während der freie Endabschnitt 13 des Tragabschnitts 2 wieder aufrecht nach oben, unter einem Winkel von etwa 45° verlaufend abgebogen ist. Diese Ausführung eignet sich zum Eingriff in eine in der Rückseite einer Platte P vorgesehene, schräg nach innen und oben verlaufende Aufnahme 24, wobei die gesamte Verankerung der Platte P von dieser vollständig verdeckt wird.

Der Halte- und Traganker nach Fig.19 weist einen am Rohrprofil befestigten Tragabschnitt in Form eines Winkeleisens 16 auf. Das eine Schenkelende 17 ist dabei an dem aus dem Befestigungsgrund herausragenden Ende des Längsabschnittes festgelegt, während das andere Schenkelende 18 einen lotrechten Haltedorn 7 trägt, der in eine Aufnahme in der Tragseite der zu haltenden Platte P eingreift.

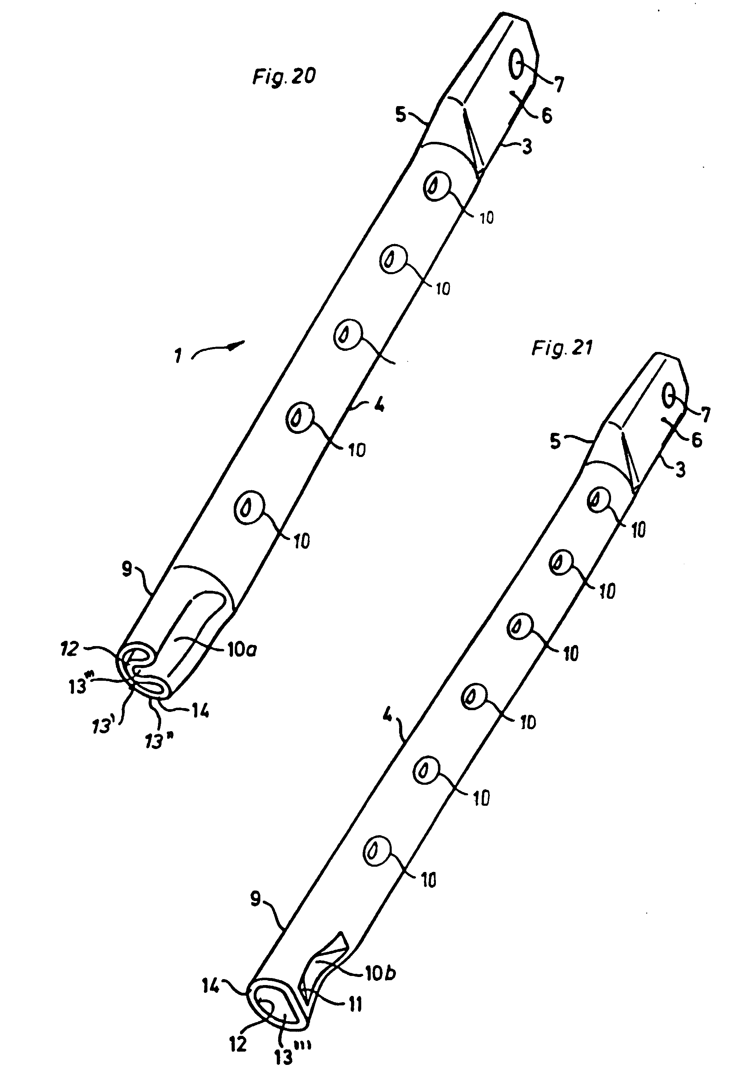

Bei den Ankern entsprechend den Fig. 20 und 21 ist der Endbereich des Längsabschnittes 4 derart verformt, daß Mörtel während des Eindringens des Ankers in den Befestigungsgrund nicht in den Ankerhohlraum eindringen kann. Hierzu ist erfindungsgemäß vorgesehen, daß im Endbereich des Längsabschnittes 4 mindestens eine den lichten Querschnitt des Rohres annähernd schließende Eindellung 10a, 10b eingedrückt ist. Diese das Rohr verschließende Eindellung 10a, 10b ist somit an dem Ende des Längsabschnittes 4 ausgebildet, das dem Tragabschnitt 3 gegenüberliegt. Die Eindellung 10a, 10b tritt somit an die Stelle des geschlossenen verjüngten Endes 9 oder einer besonderen Kappe 8 entsprechend den Fig. 1 und 2. Die Eindellung 10a kann vorteilhaft etwa E- oder C-förmig geformt sein, wie dies in Fig. 20 dargestellt ist. Dabei kann, wie Fig. 20 weiter zeigt, ein Wandteil 12 dieser Eindellung 10a, die das Rohrprofil hinten verschließt, mindestens bis zur Mitte des Rohrquerschnittes, vorzugsweise bis zur Innenfläche 13' der gegenüberliegenden Rohrwand 13" (Fig. 20), verformt sein. Die Eindellung 10a, 10b ist zweckmäßig in Längsrichtung des Rohres, also in Richtung der Achse A gesehen, größer als ihre Breite. Sie kann ferner an der Stirnseite 14 des Längsabschnittes 4 eine Öffnung 13"' aufweisen (vgl. Fig. 20). In Fig. 21 ist eine weitere Ausführungsform eines erfindungsgemäß vorgesehenen Rohrverschlusses dargestellt; hier ist die Rohrverschlußeindellung 10b in den rückwärtigen Teil des Längsabschnittes 4 etwa nach Art einer Rutsche oder Wanne, also bogenförmig nach innen derart verlaufend, daß der Hohlquerschnitt verschlossen wird, ausgebildet. Sie kann auch V-förmig oder annähernd V-förmig ausgebildet sein, wie dies ebenfalls aus Fig. 21 ersichtlich ist. Zweckmäßig ist diese Rohrverschlußeindellung 10b außerhalb der Unebenheiten 10 angeordnet, wobei jedoch in bevorzugter Weise diese Eindellungen 10a bzw. 10b symmetrisch zur Tragebene, also der Y-Y-Axialebene des Längsabschnittes 4, angeordnet sind.

## Patentansprüche

1. In ein Bohrloch eines Befestigungsgrundes wie Beton oder Mauerwerk einzumörtelnder Halte- und Traganker (1) mit einem aus dem Befestigungsgrund (30) herausragenden Tragabschnitt (2), der eine Sitzfläche (6) zur Anlage mindestens einer Platte (P) aufweist, sowie mit einem mindestens teilweise in das Bohrloch (31) hineinragenden Längsabschnitt (4), der ein Profil mit zwei in zueinander senkrechten Ebenen (X-X und Y-Y) ausgerichteten Erstreckungen aufweist,
dadurch gekennzeichnet, daß der Tragabschnitt (2) und der Längsabschnitt (4) aus einem Rohr gebildet sind und der Tragabschnitt (2) aus der in Richtung der einen Ebene (Y-Y) zusammengepreßten Rohrwandung besteht, die im Bereich des Längsabschnittes (4) durch einzelne, Vertiefungen (10; 10a; 10b) bildende Unebenheiten verformt ist, wobei die ursprüngliche Querschnittsfläche des Rohres, die von den Vertiefungen nicht erfaßt ist, über die größte Länge des Längsabschnittes (4) unverändert erhalten ist.

2. Halte- und Traganker nach Anspruch 1,
dadurch gekennzeichnet, daß die Vertiefungen (10; 10a; 10b) symmetrisch zu einer der beiden oder zu beiden Ebenen (X-X; Y-Y) des Rohrprofiles angeordnet sind.

3. Halte- und Traganker nach Anspruch 1,
dadurch gekennzeichnet, daß die Vertiefungen außerhalb der beiden Ebenen (X-X und Y-Y) angeordnet sind.

4. Halte- und Traganker nach einem der Ansprüche 1 bis 3, dadurch gekennzeichnet, daß das Rohrprofil in sich
geschlossen ist und einen kreisrunden Querschnitt hat.

5. Halte- und Traganker nach einem der Ansprüche 1 bis 4,
dadurch gekennzeichnet, daß die Vertiefungen (10) an Umfangsabschnitten des Rohrprofiles angeordnet sind, die einander etwa diametral gegenüberliegen.

6. Halte- und Traganker nach einem der Ansprüche 1 bis 5,
dadurch gekennzeichnet, daß die Vertiefungen (10) symmetrisch zu einer Winkelhalbierenden (11) des von den beiden Ebenen (X-X; Y-Y) eingeschlossenen Winkels liegen.

7. Halte- und Traganker nach einem der Ansprüche 1 bis 6,
dadurch gekennzeichnet, daß das dem Befestigungsgrund (30) zugewandte Ende (9) des Längsabschnittes (4) verjüngt ausgebildet ist.

8. Halte- und Traganker nach Anspruch 7,
dadurch gekennzeichnet, daß das verjüngte Ende (9) durch Verformung des rohrförmigen Längsabschnittes (4) gebildet ist.

9. Halte- und Traganker nach Anspruch 7,
dadurch gekennzeichnet, daß das verjüngte Ende (9) durch eine auf den Längsabschnitt (4) aufgesetzte, verjüngte Kappe (8) gebildet ist.

10. Halte- und Traganker nach einem der Ansprüche 1 bis 9,
dadurch gekennzeichnet, daß zwischen dem Längsabschnitt (4) und dem Tragabschnitt (2) ein konischer Übergangsabschnitt (5) vorgesehen ist.

11. Halte- und Traganker nach Anspruch 10,
dadurch gekennzeichnet, daß der konische Übergangsabschnitt (5) mit Verstärkungsrippen (5') versehen ist.

12. Halte- und Traganker nach einem der Ansprüche 1 bis 11,
dadurch gekennzeichnet, daß im Tragabschnitt (2) in Längsrichtung des Ankers (1) verlaufende Hohlrippen (3) ausgeformt sind, die symmetrisch zu der Ebene (Y-Y) angeordnet sind, in deren Richtung die Rohrwandung zusammengepreßt ist.

13. Halte- und Traganker nach Anspruch 12,
dadurch gekennzeichnet, daß die Hohlrippen (3) symmetrisch zu beiden Ebenen (X-X und Y-Y) ausgeformt sind.

14. Halte- und Traganker nach einem der Ansprüche 1 bis 13,
dadurch gekennzeichnet, daß die zur Anlage an der zu halternden Platte (P) bestimmte Sitzfläche (6) in der Einbaulage des Ankers (1) horizontal liegt und eine Aufsitzfläche für die Platte (P) bildet.

15. Halte- und Traganker nach einem der Ansprüche 1 bis 14,
dadurch gekennzeichnet, daß der Tragabschnitt (2) versetzt zu der Ebene (X-X) des Rohrprofiles angeordnet ist, die senkrecht zu der Ebene (Y-Y) liegt, in deren Richtung die Rohrwandung zusammengepreßt ist.

16. Halte- und Traganker nach einem der Ansprüche 1 bis 15,
dadurch gekennzeichnet, daß die Sitzfläche (6) in Längsrichtung des Ankers (1) zur vorderen Kante (21) des Tragabschnittes (2) abfällt und mit einem zwischen die zu halternde Platte (P) und dem Tragabschnitt (2) einzuschiebenden Ausgleichskeil (15) mit entsprechendem Keilwinkel zusammenwirkt.

17. Halte- und Traganker nach Anspruch 16,
dadurch gekennzeichnet, daß die Sitzfläche (6) und die ihr zugewandte Seite des Keils (15) zur Erhöhung des Reibkoeffizienten bearbeitet, vorzugsweise gezahnt sind.

18. Halte- und Traganker nach einem der Ansprüche 1 bis 17,
dadurch gekennzeichnet, daß der Tragabschnitt (2) einen abgewinkelten Endabschnitt (13) aufweist, der in die zu halternde Platte (P) eingreift.

19. Halte- und Traganker nach einem der Ansprüche 1 bis 18,
dadurch gekennzeichnet, daß in der Wandung des Längsabschnitts (4), vorzugsweise in einer der Vertiefungen (10), eine Öffnung (19) vorgesehen ist.

20. Halte- und Traganker nach Anspruch 19,
dadurch gekennzeichnet, daß im Längsabschnitt (4) des Ankers (1) ein Stopfen (20) angeordnet ist, der den Hohlraum des Längsabschnittes (4) in Richtung zum Tragabschnitt (2) verschließt.

21. Halte- und Traganker nach einem der Ansprüche 1 bis 20,
dadurch gekennzeichnet, daß mindestens eine Vertiefung (10a; 10b) in dem dem Tragabschnitt (2) gegenüberliegenden Endbereich des Längsabschnittes (4) vorgesehen ist und den lichten Querschnitt des rohrförmigen Ankers annähernd verschließt.

22. Halte- und Traganker nach Anspruch 21,
dadurch gekennzeichnet, daß die Vertiefung (10a) etwa E- oder C-förmig ausgebildet ist, derart, daß ein Teil (12) dieser Vertiefung (10a) bis zur Innenfläche (13') der gegenüberliegenden Wandung (13") des Rohres reicht.

23. Halte- und Traganker nach Anspruch 21 oder 22,
dadurch gekennzeichnet, daß die Vertiefung (10a bzw. 10b) an der Stirnseite (14) des Längsabschnittes (4) eine Öffnung (13"') bildet.

24. Halte- und Traganker nach einem der Ansprüche 21 bis 23,
dadurch gekennzeichnet, daß die Vertiefung (10a; 10b) etwa bogenförmig nach Art einer Wanne oder Rutsche oder V-förmig ausgebildet ist.

25. Halte- und Traganker nach einem der Ansprüche 21 bis 24,
dadurch gekennzeichnet, daß die Vertiefung (10a; 10b) symmetrisch zu der Ebene (Y-Y) verläuft, in deren Richtung die Rohrwandung zusammengepreßt ist.

26. Verfahren zum Einmörteln eines Halte- und Tragankers nach Anspruch 19 oder 20 in dem Bohrloch eines Befestigungsgrundes,
gekennzeichnet durch
a) Einsetzen des Ankers (1) in das Bohrloch (31) bis zur Öffnung (19) in der Wandung des Längsabschnitts (4),
b) Ausrichten des Ankers (1),
c) Einpressen von Mörtel oder Beton durch die öffnung (19) in das Rohrinnere des Ankers (1), bis Mörtel zwischen der Bohrlochwandung und dem Anker an der Oberfläche des Befestigungsgrundes (30) austritt.

## Claims

1. Retaining and supporting stay (1) to be mortared into a drilled hole in a mounting base like concrete or masonry, having a supporting section (2) projecting from the mounting base (30), which has a seating (6) for the mounting of at least one plate (P), and also with a lengthwise section (4) at least partially protruding into the drilled hole (31) which has a profile with two extensions aligned in planes (X-X and Y-Y) perpendicular to each other,
characterized in that the supporting section (2) and the lengthwise section (4) are formed from a tube and the supporting section (2) consists of the tube wall pressed together in the direction of one plane (Y-Y), which in the zone of the lengthwise section (4) is shaped by individual unevennesses forming depressions (10; 10a; 10b), the original cross-sectional area of the tube, which is not covered by the depressions, being maintained unmodified over the greatest length of the lengthwise setion (4).

2. Retaining and supporting stay according to Claim 1,
characterized in that the depressions (10; 10a; 10b) are located symmetrically to one of the two or to both planes (X-X; Y-Y) of the tube profile.

3. Retaining and supporting stay according to Claim 1,
characterized in that the depressions are located outside the two planes (X-X and Y-Y).

4. Retaining and supporting stay according to one of Claims 1 to 3,
characterized in that the tube profile is in itself enclosed and has a circular cross-section.

5. Retaining and supporting stay according to one of Claims 1 to 4,
characterized in that the depressions (10) are located on peripheral sections of the tube profile which are about diametrically opposite each other.

6. Retaining and supporting stay according to one of Claims 1 to 5,
characterized in that the depressions (10) lie symmetrically to a median (11) of the angle included by the two planes (X-X; Y-Y).

7. Retaining and supporting stay according to one of Claims 1 to 6,
characterized in that the end (9) of the lengthwise section (4) facing the mounting base (30) is constructed so that it tapers.

8. Retaining and supporting stay according to Claim 7,
characterized in that the tapered end (9) is formed by shaping the tubular lengthwise section (4).

9. Retaining and supporting stay according to Claim 7,
characterized in that the tapered end (9) is formed by a tapered cap (8) placed onto the lengthwise section (4).

10. Retaining and supporting stay according to one of Claims 1 to 9,
characterized in that a conical transition section (5) is provided between the lengthwise section (4) and the supporting section (2).

11. Retaining and supporting stay according to Claim 10,
characterized in that the conical transition section (5) is fitted with reinforcing ribs (5').

12. Retaining and supporting stay according to one of Claims 1 to 11,
characterized in that, hollow ribs (3) running in the longitudinal direction of the stay (1) are formed in the supporting section (2), said ribs being located symmetrically to the plane (Y-Y), in the direction of which the tube wall has been pressed together.

13. Retaining and supporting stay according to Claim 12,
characterized in that the hollow ribs (3) are formed symmetrically to the two planes (X-X and Y-Y).

14. Retaining and supporting stay according to one of Claims 1 to 13,
characterized in that the seating (6) intended for mounting on the plate (P) to be mounted lies horizontally in the fitting position of the stay (1) and forms a seat for the plate (P).

15. Retaining and supporting stay according to one of Claims 1 to 14,
characterized in that the supporting section (2) is located in a staggered way to the plane (X-X) of the tube profile which is perpendicular to the plane (Y-Y), in the direction of which the tube wall is pressed together.

16. Retaining and supporting stay according to one of Claims 1 to 15,
characterized in that the seating (6) drops in the longitudinal direction of the stay (1) towards the front edge (21) of the supporting section (2) and interacts with a compensating wedge (15) with an appropriate wedge angle to be pushed in between the plate (P) to be retained and the supporting section (2).

17. Retaining and supporting stay according to Claim 16,
characterized in that the seating (6) and the side of the wedge (15) facing it have been machined, preferably serrated, to increase the coefficient of friction.

18. Retaining and supporting stay according to one of Claims 1 to 17,
characterized in that the supporting section (2) has an angular end section (13) which engages in the plate (P) to be retained.

19. Retaining and supporting stay according to one of Claims 1 to 18,
characterized in that an aperture (19) is provided in the wall of the lengthwise section (4), preferably in one of the depressions (10).

20. Retaining and supporting stay according to Claim 19,
characterized in that a plug (20) is located in the lengthwise section (4) of the stay (1), which closes the cavity of the lengthwise section (4) in a direction towards the supporting section (2).

21. Retaining and supporting stay according to one of Claims 1 to 20,
characterized in that at least one depression (10a; 10b) is provided in the end zone of the lengthwise section (4) lying opposite the supporting section (2) and approximately closes the open cross-section of the tubular stay.

22. Retaining and supporting stay according to Claim 21,
characterized in that the depression (10a) is constructed approximately E-shaped or C-shaped, in such a manner that a part (12) of this depression (10a) reaches to the inner surface (13') of the opposite wall (13") of the tube.

23. Retaining and supporting stay according to Claim 21 or 22,
characterized in that the depression (10a or 10b) on the front side (14) of the lengthwise section (4) forms an aperture (13"').

24. Retaining and supporting stay according to one of the Claims 21 to 23,
characterized in that the depression (10a; 10b) is constructed approximately in an arched shape in the manner of a trough or a chute or in a V-shape.

25. Retaining and supporting stay according to one of Claims 21 to 24,
characterized in that the depression (10a; 10b) runs symmetrically to the plane (Y-Y), in the direction of which the tube wall is pressed together.

26. Method for mortaring in a retaining and supporting stay according to Claim 19 or 20 in the drilled hole of a mounting base,
characterized by
a) insertion of the stay (1) into the drilled hole (31) as far as the aperture (19) in the wall of the lengthwise section (4),
b) alignment of the stay (1),
c) pressing in mortar or cement through the aperture (19) into the interior of the tube of the stay (1) until mortar comes out between the wall of the drilled hole and the stay at the surface of the mounting base (30).

## Revendications

1. Ancre de retenue et de support (1) à sceller au mortier dans un trou foré dans un support de fixation (30), par exemple du béton ou de la maçonnerie, comprenant une section de support (2) avec une surface portante (6) pour l'appui d'au moins un panneau (P), ainsi qu'une section longitudinale (4) qui dépasse au moins en partie dans le trou (31) et présente un profil avec deux extensions orientées dans deux plans (X-X et Y-Y) perpendiculaires, **caractérisée en** c e que la section de support (2) et la section longitudinale (4) sont constituées par un tube et que la section de support (2) est formée par la paroi du tube comprimée dans la direction de l'un des plans (Y-Y) qui est déformée, dans la région de la section longitudinale (4) par des inégalités formant des creux (10; 10a; 10b), l'aire de la section initiale du tube qui n'est pas affectée par les creux restant conservée sur la plus grande longueur de la section longitudinale (4).

2. Ancre de retenue et de support selon la revendication 1, caractérisée en ce que les creux (10; 10a; 10b) sont disposés symétriquement par rapport à l'un des deux plans (X-X; Y-Y) du profilé tubulaire.

3. Ancre de retenue et de support selon la revendication 1, caractérisée en ce que les creux sont disposés à l'extérieur des deux plans (X-X et Y-Y).

4. Ancre de retenue et de support selon l'une des revendications 1 à 3, caractérisée en ce que le profilé tubulaire est fermé en soi et présente une section transversale circulaire.

5. - Ancre de retenue et de support selon l'une des revendications 1 à 4, caractérisée en ce que les creux (10) sont disposés sur des sections circonférentielles du profilé tubulaire sensiblement opposées diamétralement.

6. - Ancre de retenue et de support selon l'une des revendications 1 à 5, caractérisée en ce que les creux (10) sont disposés symétriquement par rapport à une bissectrice (11) de l'angle enfermé par les deux plans (X-X; Y-Y).

7. Ancre de retenue et de support selon l'une des revendications 1 à 6, caractérisée en ce que l'extrémité (9) de la section longitudinale (4) tournée vers le support de fixation (30) se rétrécit.

8. - Ancre de retenue et de support selon la revendication 7, caractérisée en ce que l'extrémité (9) rétrécie est constituée par une déformation de la section longitudinale (4) de forme tubulaire.

9. Ancre de retenue et de support selon la revendication 7, caractérisée en ce que l'extrémité (9) rétrécie est constituée par un capuchon (8) effilé emboîté sur la section longitudinale (4).

10. Ancre de retenue et de support selon l'une des revendications 1 à 9, caractérisée en ce qu'une section de transition (5) conique est prévue entre la section longitudinale (4) et la section de support (2).

11. Ancre de retenue et de support selon la revendication 10, caractérisée en ce que la section de transition (5) conique est munie de nervures de renforcement (5').

12. Ancre de retenue et de support selon l'une des revendications 1 à 11, caractérisée en ce que dans la section de support (2) sont conformées des nervures creuses (3) qui s'étendent dans le sens longitudinal de l'ancre (1) et sont orientées symétriquement par rapport au plan (Y-Y) dans la direction duquel la paroi de tube est comprimée.

13. - Ancre de retenue et de support selon la revendication 12, caractérisée en ce que les nervures creuses (3) sont conformées symétriquement par rapportaux deux plans (X-X et Y-Y).

14. - Ancre de retenue et de support selon l'une des revendications 1 à 13, caractérisée en ce que, dans la position de montage de l'ancre (1), la surface portante (6) destinée à être appliquée contre le panneau (P) à fixer est orientée horizontalement et forme une surface d'appui pour le panneau (P).

15. - Ancre de retenue et de support selon l'une des revendications 1 à 14, caractérisée en ce que la section de support (2) est décalée par rapport au plan (X-X) du profilé tubulaire, lequel est perpendiculaire au plan (Y-Y) dans la direction duquel la paroi de tube est comprimée.

16. - Ancre de retenue et de support selon l'une des revendications 1 à 15, caractérisée en ce que la surface portante (6) est inclinée dans la direction longitudinale de l'ancre (1) vers le bord antérieur (21) de la section de support (2) et qu'elle coopère avec un coin de compensation (15) avec un angle de coin adéquat à introduire entre le panneau (P) à fixer et la section de support (2).

17. - Ancre de retenue et de support selon la revendication 16, caractérisée en ce que la surface portante (6) et la surface du coin (15) tournée vers celle-ci sont traitées, de préférence dentelées, pour augmenter le coefficient de frottement.

18. - Ancre de retenue et de support selon l'une des revendications 1 à 17, caractérisée en ce que la section de support (2) comporte une section terminale (13) coudée qui s'engage dans le panneau (P) à fixer.

19. - Ancre de retenue et de support selon l'une des revendications 1 à 18, caractérisée en ce qu'une ouverture (19) est prévue dans la paroi de la section longitudinale (4), de préférence dans l'un des creux (10).

20. - Ancre de retenue et de support selon la revendication 19, caractérisée en ce que dans la section longitudinale (4) de l'ancre (1) est disposé un bouchon (20) qui obture la cavité de la section longitudinale (4) en direction de la section de support (2).

21. Ancre de retenue et de support selon l'une des revendications 1 à 20, caractérisée en ce qu'au moins un creux (10a; 10b) est prévu dans la section terminale de la section longitudinale (4) opposée à la section de support (2) et obture à peu près l'ouverture libre de l'ancre tubulaire.

22. Ancre de retenue et de support selon la revendication 21, caractérisée en ce que le creux (10a) est sensiblement conformé en E ou en C, de telle sorte qu'une partie (12) de ce creux (10a) s'étend jusqu'à la surface intérieure (13') de la paroi opposée (13") du tube.

23. Ancre de retenue et de support selon l'une des revendications 21 ou 22, caractérisée en ce que le creux (10a et respectivement 10b) forme une ouverture (13"') sur la face frontale (14) de la section longitudinale (4).

24. - Ancre de retenue et de support selon l'une des revendications 21 à 23, caractérisée en ce que le creux (10a; l0b) est conformé sensiblement en arc à la manière d'une cuvette ou d'une goulotte, ou qu'il présente une forme en V.

25. Ancre de retenue et de support selon l'une des revendications 21 à 24, caractérisée en ce que le creux (10a; 10b) s'étend symétriquement au plan (Y-Y) dans la direction duquel la paroi du tube est comprimée.

26. Procédé de fixation au mortier d'une ancre de retenue et de support selon la revendication 19 ou 20 dans le trou foré dans un support de fixation, **caractérisé en ce** qu'il comprend
a) la mise en place de l'ancre (1) dans le trou (31) jusqu'à l'ouverture (19) dans la paroi de la section longitudinale (4),
b) l'alignement de l'ancre (1),
c) l'injection de mortier ou de béton au travers de l'ouverture (19) dans l'intérieur du tube de l'ancre (1) jusqu'à ce que le mortier ressorte sur le support de fixation (30), entre la paroi du trou foré et l'ancre.
